# EUROPÄISCHE PATENTSCHRIFT

(11) **EP 2 513 466 B1**
(45) Veröffentlichungstag und Bekanntmachung des Hinweises auf die Patenterteilung: **23.10.2013**
(21) Anmeldenummer: 10787376.2
(22) Anmeldetag: 30.11.2010
(51) Int. Cl.: F02M 65/00

(54) **SYSTEM UND VERFAHREN ZUR MESSUNG VON EINSPRITZVORGÄNGEN**
SYSTEM AND METHOD FOR MEASURING INJECTION EVENTS
SYSTÈME ET PROCÉDÉ POUR MESURER LE PROCESSUS D'INJECTION

(30) Priorität: 17.12.2009 DE 102009058932
(43) Veröffentlichungstag der Anmeldung: 24.10.2012
(73) Patentinhaber: AVL List GmbH, 8020 Graz (AT)
(72) Erfinder: KAMMERSTETTER, Heribert, 5411 Oberalm (DE); METZLER, Rainer, 41564 Kaarst (DE); WERNER, Manfred, 40593 Düsseldorf (DE)
(74) Vertreter: Patentanwälte ter Smitten Eberlein Rütten Partnerschaftsgesellschaft
(86) Internationale Anmeldenummer: PCT/EP2010/068470
(87) Internationale Veröffentlichungsnummer: WO 2011/073024

(56) Entgegenhaltungen:
- DE-A1- 10 064 509
- DE-B3- 10 331 228
- FR-A1- 2 795 139

## Beschreibung

Die Erfindung betrifft ein System zur Messung von Einspritzvorgängen mit einem Einspritzventil, einer mit einem Fluid gefüllten Messkammer, in die über das Einspritzventil eine Fluidmenge einspritzbar ist, einem Kolben, der in der Messkammer angeordnet ist, einem Sensor, dessen erzeugte Spannung ein Maß für die Auslenkung des Kolbens darstellt, und der mit einer Auswerteeinheit verbunden ist, die kontinuierlich die Auslenkung des Kolbens in der Messkammer erfasst, einer rotatorischen Verdrängerpumpe, die in Abhängigkeit der anliegenden Volumendifferenz angetrieben ist und in einem Bypasskanal zur Messkammer angeordnet ist und einem Drucksensor, der in der Messkammer angeordnet ist sowie ein Verfahren zur Messung von Einspritzvorgängen mit einem derartigen System.

Derartige Systeme sind allgemein bekannt und werden in verschiedenen Veröffentlichungen beschrieben. Vor allem im Bereich direkteinspritzender Verbrennungskraftmaschinen, die nach dem Diesel- oder dem Ottoverfahren arbeiten, steigen die Anforderungen an die Einspritzsysteme hinsichtlich der zugemessenen Menge, dem Zeitpunkt und dem Verlauf der Einspritzung stetig. So sind Einspritzverläufe in den letzten Jahren dahingehend modifiziert worden, dass entweder die zuzumessende Einspritzmenge für einen Verbrennungszyklus in mehrere kleine Teileinspritzungen aufgetrennt wird oder die Ratenverlaufsformung über die Modulation des Kraftstoffdrucks oder andere ratenmodulierende Maßnahmen kontrolliert wird. Um derartige Einspritzverläufe möglichst in Echtzeit genau wiedergeben zu können müssen entsprechende Systeme zur Verfügung gestellt werden, mit denen das Einspritzverhalten einzelner Kraftstoffinjektoren möglichst genau wiedergegeben werden kann.
Aus der DE 103 31 228 B3 ist eine Vorrichtung zur Messung von zeitlich aufgelösten volumetrischen Durchflußvorgängen insbesondere von Einspritzvorgängen bei Verbrennungskraftmaschinen bekannt. Diese besteht aus einem in einer Bypassleitung angeordneten rotatorischen Verdränger und einem in einer Messkammer angeordneten beweglichen Kolben, der das gleiche spezifische Gewicht wie die Messflüssigkeit aufweist. Dem Kolben wird ein Sensor zugeordnet, dessen erzeugte Spannung ein Maß für die Auslenkung des Kolbens bei auftretenden Einspritzungen darstellt. Die erzeugte Spannung wird an eine Auswerteeinheit übertragen, die kontinuierlich die Auslenkung des Kolbens in der Messkammer erfasst und zeitlich hoch aufgelöste Durchflussvorgänge graphisch darstellt. Eine Regelelektronik sorgt dafür, dass die Steuerung des rotatorischen Verdrängers derart erfolgt, dass während eines Arbeitszyklus der Einspritzanlage die Drehzahl des rotatorischen Verdrängers konstant bleibt und dem mittleren Durchfluss über den gesamten Arbeitszyklus im Wesentlichen entspricht. Diese Vorrichtung ermöglicht eine seitlich hochaufgelöste Darstellung von Durchftussvorgängen, so dass sowohl Gesamtmengen als auch genaue Verläufe darstellbar und auswertbar sind.

Diese Vorrichtung hat jedoch den Nachteil, dass längere thermische Einschwingzeiten aufgrund des Energieeintrags durch die Einspritzung in die Messkammer vorhanden sind. Bislang wurde versucht, die hieraus resultierenden Messungenauigkeiten durch Kompensationskonstanten, die durch Vorabmessungen gewonnen wurden, zu kompensieren. Da diese Konstanten jedoch nicht immer genau bekannt sind, bleiben diese Ungenauigkeiten vorhanden.

So ist aus der DE 100 64 509 A1 ein Verfahren zum Kalibrieren von Wegsensoren bekannt geworden, bei dem vor der eigentlichen Messung eine Kalibriertabelle mit Quadrupeln aus Temperatur, Druck und dem Messsignal des Wegsensors erstellt wird. Um diese Tabelle erstellen zu können, ist ein Ringraum temperierbar, das heißt im Ringraum sind bestimmte Temperaturen einstellbar. Diese Kompensation ist lediglich unter hohem Zeitaufwand zur Kalibrierung durchzuführen, welche zusätzlich für jedes weitere Ventil wiederholt werden muss, Zusätzlich findet bei jeder Einspritzung ein erneuter Einschwingvorgang im System statt, so dass eine exakte Messung bei einer aus mehreren Einzeleinspritzungen bestehenden Gesamteinspritzung nicht aufgelöst dargestellt werden kann, da keine Einzeltemperaturänderungen messbar sind.

Es stellt sich daher die Aufgabe, ein System und ein Verfahren zur Messung von Einspritzvorgängen bereitzustellen, mit denen die Messgenauigkeit eines Durchflussmessgerätes erhöht werden kann.

Diese Aufgabe wird durch ein System mit den Merkmalen des kennzeichnenden Teils des Anspruchs 1 sowie durch ein Verfahren mit den Merkmalen des Anspruchs 6 gelöst.

Dadurch, dass an der Messkammer Heiz- oder Kühlelemente angeordnet sind, die über ein Steuergerät derart betätigbar sind, dass die durch die eingespritzte Fluidmenge und die Kühl- oder Heizelemente eingebrachte Energiemenge pro Einspritzung im Wesentlichen konstant ist, wird erreicht, dass die gemessene und berechnete Einspritzmenge nicht mehr abhängig von einer Temperaturänderung ist. Entsprechend werden die Einspritzmengen auch bei mehreren Einspritzvorgängen hintereinander korrekt bestimmt, da keine Einschwingvorgänge vorhanden sind.

Diese Vorteile ergeben sich auch durch ein Verfahren, bei dem eine im Wesentliche konstante Energiemenge pro Einspritzung in die Messkammer eingebracht wird, welche sich aus der durch die Einspritzung eingebrachten Energiemenge und einer über Heiz- oder Kühlelemente eingebrachten Energiemenge zusammensetzt.

Vorzugsweise sind die Heizelemente Glühkerzen. Diese sind geeignet, in sehr kurzer Zeit ausreichende Energiemengen in das System einzubringen.

In einer weiterführenden Ausgestaltung ist eine Kühlvorrichtung an der Messkammer angeordnet, über die eine konstante Wärmemenge aus der Messkammer abführbar ist. Hierdurch wird ein Überhitzen des Systems bei ständigem Energieeintrag ausgeschlossen.

In einer hierzu weiterführenden Ausführungsform ist die der Kühlvorrichtung zugeführte Kühlmittelmenge über ein mit dem Steuergerät verbundenes Magnetventil regelbar. Dieses ist ebenfalls sehr schnell schaltend, so dass eine genaue Regelung möglich wird.

Vorzugsweise ist in der Messkammer ein Temperaturfühler angeordnet, über den der korrekte Energieeintrag überprüfbar ist. Die über den Temperaturfühler ermittelten Werte können auch zur weiteren Korrektur des Energieeintrags oder bei sehr schneller Temperaturaufnahme auch als Führungsgröße für den Energieeintrag dienen.

Bei Durchführung eines vorteilhaften Verfahrens wird zunächst ein maximaler Energieeintrag bei maximaler Öffnungszeit des Einspritzventils berechnet, anschließend der zu erwartende Energieeintrag durch die Einspritzung berechnet oder der tatsächliche Energieeintrag gemessen, daraufhin eine Differenzenergie zwischen maximalem Energieeintrag und tatsächlichem Energieeintrag berechnet und abschließend die Differenzenergie über die Heizelemente in die Messkammer eingebracht. Somit wird erreicht, dass ein immer gleicher Energieeintrag pro Einspritzung in das System erfolgt, wodurch eine jeweils konstante Energieerhöhung im System stattfindet, welche durch die zusätzliche Kühlung wieder abgebaut werden kann. Entsprechend erfolgt jede Messung bei gleicher Temperatur im System.

In einer alternativen Ausführung wird zunächst ein tatsächlicher oder zu erwartender Energieeintrag durch die Einspritzung berechnet oder gemessen und anschließend diese Energiemenge dem System über eine entsprechende Kühlung wieder entzogen. Auch auf diese Weise kann eine konstante Temperatur im System zur exakten Messung sichergestellt werden.

In einer vorteilhaften Ausgestaltung der Erfindung wird der zu erwartende Energieeintrag über ein Kennfeld berechnet, in dem der Energieeintrag über dem bei bestimmten Öffnungszeiten des Einspritzventils zu erwartenden Durchfluss und der eingestellten Druckdifferenz aufgetragen wird. Da dem Steuergerät die Öffnungszeit bekannt ist und über den Druckregler und die Hochdruckpumpe eine feststehende Druckdifferenz sowie ein theoretisch zu erwartender Durchfluss der Verdrängerpumpe bei dieser Öffnungszeit bekannt sind, kann hieraus ein theoretisch notwendiger Energieeintrag über das Kennfeld bestimmt und dem System zugeführt werden. Die resultierenden Differenzen zwischen dem theoretischen Durchfluss und dem anschließend im System gemessenen Durchfluss sind in der Regel so gering, dass eine Nachkorrektur nicht erforderlich, jedoch selbstverständlich möglich ist. Die Messung kann demnach so häufig mit verbesserten Kennfeldern wiederholt werden bis eine konstante Temperatur im System vorliegt.

In einer alternativen Ausgestaltung wird der tatsächliche Energieeintrag durch Messung einer Temperaturänderung in der Messkammer bestimmt und die Differenz zum maximalen Energieeintrag dem System zugeführt. Auch hierdurch werden konstante Temperaturen in der Messkammer erzielt, die zu genauen Messergebnissen führen, jedoch ist dieses System deutlich träger.

In einer weiterführenden Ausgestaltung wird die Temperaturänderung nach Einbringen des zusätzlichen Energieeintrags gemessen und aus der Temperaturänderung ein Korrekturenergieeintrag bestimmt, der der Messkammer zugeführt oder entzogen wird. So kann ein iterativ arbeitendes System geschaffen werden, durch welches Differenzen zwischen dem für den Energieeintrag zu Grunde gelegten Durchfluss und dem daraufhin gemessenen Durchfluss korrigiert werden.

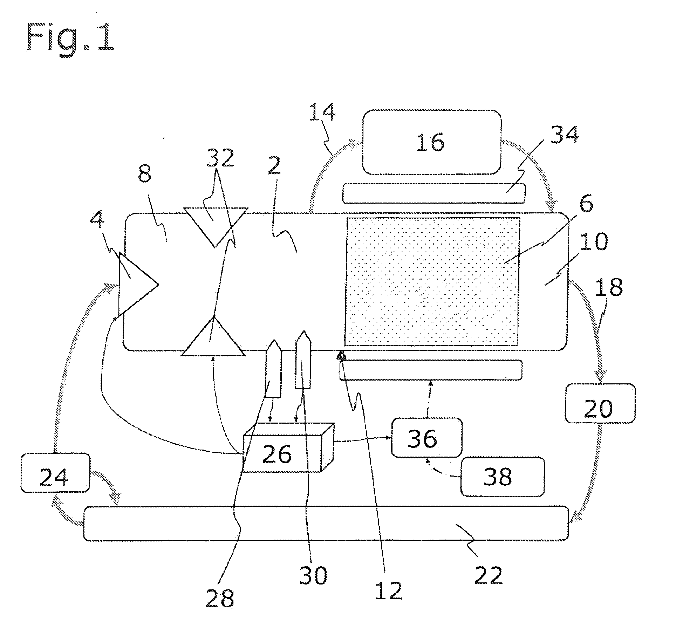

Ein Ausführungsbeispiel eines erfindungsgemäßen Systems ist in Figur 1 schematisch dargestellt. Anhand dieser Figur wird die Erfindung im Folgenden beschrieben.

Das erfindungsgemäße System besteht aus einer Messkammer 2 an der ein Einspritzventil 4 derart angeordnet ist, dass dieses in die Messkammer 2 einspritzen kann. In der Messkammer 2 befindet sich ein Kolben 6, der axial bewegbar ist und das gleiche spezifische Gewicht aufweist, wie das Fluid in der Messkammer 2. Der Kolben 6 teilt die Messkammer 2 in einen Einlassbereich 8 und einen Auslassbereich 10. An der Messkammer 2 ist ein Sensor 12 angeordnet, der die Bewegung des Kolbens 6 in der Messkammer 2 delektiert.

Zusätzlich ist in einem den Kolben 6 umgehenden Bypasskanal 14, welche den Einlassbereich 8 der Messkammer 2 unter Umgehung des Kolbens 6 mit dem Auslassbereich 10 verbindet, eine rotatorische Verdrängerpumpe 16, beispielsweise in Form einer Zahnradpumpe, angeordnet. Vom Auslassbereich 10 der Messkammer 2 führt eine Auslassleitung 18 über einen Druckregler 20 in einen Tank 22, in dem das Fluid gespeichert wird und der über eine Förderpumpe 24 mit dem Einspritzventil 4 verbunden ist. Der Drurckregler 20 sorgt für einen feststehenden Druck in der Auslassleitung 18.

Der Sensor 12 ist ebenso wie das Einspritzventil 4 und die Pumpe 16 mit einem Steuergerät 26 verbunden, welches die Werte dieses Sensors 12 sowie die Umdrehungszahl der Pumpe 16, die mit einem Bewegungssensor ausgestattet ist, aufnimmt und weiterverarbeitet. In der Messkammer 2 ist zwischen dem Kolben 6 und dem Einspritzventil 4 ein Drucksensor 28 sowie ein Temperaturfühler 30 angeordnet, die kontinuierlich die in diesem Bereich auftretenden Drücke und Temperaturen messen und wiederum dem Steuergerät 26 zuführen, welches gleichzeitig zur Ansteuerung des Einspritzventils 4 und als Auswerteeinheit zur Kolbenlageerfassung dient.

Erfindungsgemäß sind an der Messkammer 2 Heizelemente 32 in Form von Glühkerzen angeordnet, über die in kürzester Zeit Energie in die Messkammer 2 zuführbar ist. Hierzu sind die Heizelemente 32 ebenfalls mit dem Steuergerät verbunden. Des Weiteren ist im Bereich des Kolbens 6 eine Kühlvorrichtung 34 angeordnet, über die Energie aus der Messkammer 2 abgezogen werden kann. Die Regelung erfolgt über ein Magnetventil 36, über welches ein konditioniertes Kühlmedium aus einem Vorratsbehälter 38 der Kühlvorrichtung 34 zugeführt werden kann.

Wird nun das Prüffluid vom Einspritzventil 4 in die Messkammer 2 eingespritzt, reagiert der Kolben 6 ohne Verzögerung. Die im Bypasskanal 14 angeordnete Verdrängerpumpe 16 wird gleichzeitig mit einer Drehzahl angetrieben, die abhängig ist von der Auslenkung des Kolbens 6 und somit von der eingespritzten Fluidmenge. Die Regelung der Pumpendrehzahl erfolgt in bekannter Weise derart, dass über einen Arbeitszyklus die Drehzahl der Pumpe 16 und somit der Durchfluss konstant gehalten wird.

Die Auslenkung des Kolbens 6 entsteht somit durch Überlagerung eines kontinuierlichen Anteils durch die Pumpe 16 und einem diskontinuierlichen Anteil während eines Einspritzvorgangs in entgegengesetzter Richtung. Mit Hilfe des in der Messkammer 2 angeordneten Drucksensors 28 wird im Steuergerät 26 das Signal des Sensors 12, in eine eingespritzte Fluidmenge über die Zeit umgerechnet. Dazu wird automatisch der kontinuierliche Anteil der durch die Pumpe 16 entstehenden Bewegung von dem tatsächlich zurückgelegten Weg also den Werten des Sensors 12 subtrahiert. Die Umrechnung im Steuergerät 26 erfolgt über eine physikalisch basierte Modellrechnung, bei der der tatsächlich gemessene Kolbenweg mit Hilfe des Drucksignals in einen Kolbenweg umgerechnet wird, der sich bei isobaren Bedingungen während der Messung einstellen würde. Entsprechend wird in dieser Rechnung auch das Kompressibilitätsmodul des Fluids als Funktion des Drucks berücksichtigt.

Aufgrund des Energieeintrags durch die Einspritzung verändert sich jedoch auch die Temperatur des Fluids. Eine Kompensation durch Messung des Temperaturverlaufs und Berechnung mittels Kompensationskonstanten bleibt jedoch häufig fehlerbehaftet. Daher werden die Heizelemente 32 benutzt, um zusätzlich Energie in die Messkammer 2 einzubringen. Die Energiemenge wird derart bestimmt, dass die Temperatur in der Messkammer 2 unabhängig von der Einspritzzeit konstant bleibt.

Hierzu wird zunächst aus den Kenndaten des Einspritzventils 4 eine maximale durch die Einspritzung in die Messkammer 2 einzubringende Energiemenge berechnet. Der tatsächliche Energieeintrag in die Messkammer 2 wird entsprechend in der Regel kleiner sein als diese Energiemenge. Die Differenz zwischen der maximalen berechneten Energiemenge und der durch die Einspritzung eingebrachten Energiemenge wird der Messkammer bei jeder Einspritzung über die Heizelemente 32 zugeführt. Gleichzeitig wird zur Aufrechterhaltung der Temperatur in der Messkammer 2 eine feste Energiemenge über die Kühlvorrichtung 34 abgeführt. Entsprechend muss in der Berechnung der eingespritzten Fluidmenge keine Temperaturkompensation durchgeführt werden. Es entstehen keine Fehler aufgrund veränderter Kompressibilität durch veränderte Temperaturen.

Die Regelung der über die Heizelemente 32 zuzuführenden Energiemenge erfolgt beispielsweise mittels eines im Steuergerät 26 hinterlegten Kennfeldes, in dem der Energieeintrag über dem Durchfluss der Pumpe 16 und der über den Druckregler festgelegten Druckdifferenz aufgetragen ist. Der Durchfluss ist dabei abhängig von der eingestellten Öffnungszeit und der Druckdifferenz. Diese Energiemenge wird somit über das Kennfeld berechnet und der Messkammer 2 über die Heizelemente 32 während eines Messzyklus zugegeben. Da bei dieser Regelung der Abtransport von Energie durch Abfuhr des Mediums selbst nicht berücksichtigt wird, kann zur Korrektur oder Plausibilitätsprüfung der Temperaturfühler 30 genutzt werden, der demnach eine zu Beginn und zum Ende des Zyklus konstante Temperatur messen sollte. Ist diese nicht konstant, liegt ein Fehler im hinterlegten Kennfeld vor, welches entsprechend angepasst werden kann.

Alternativ kann auch die Bestimmung der einzufügenden Energiemenge lediglich über den Temperaturfühler 30 erfolgen. In diesem Fall handelt es sich jedoch um ein vollständig nachlaufendes System mit längeren Einschwingzeiten.

Entsprechend ist es sowohl möglich, eine Anpassung des Kennfeldes so lange durchzuführen, bis eine konstante Temperatur vorliegt, als auch bei nicht vorhandener Konstanz auf Fehlfunktionen des Einspritzventils zu schließen.

Es folgt eine sehr genaue schnell durchzuführende Messung, welche unter isothermen Bedingungen stattfindet und somit keine zusätzlichen temperaturabhängigen Kompressibilitätskostanten benötigt.

Es söllte deutlich sein, dass auch durch reine Kühlung, welche jedoch sehr schnell erfolgen muss, ein Energiegleichgewicht erzielbar ist und somit die Temperatur konstant gehalten werden kann. Auch sind weitere Möglichkeiten zur Ermittlung des einzubringenden oder abzuziehenden Energieanteils denkbar. Konstruktive Änderungen sind ebenfalls im Rahmen des Hauptanspruchs denkbar.

## Patentansprüche

1. System zur Messung von Einspritzvorgängen mit
einem Einspritzventil,
einer mit einem Fluid gefüllten Messkammer, in die über das Einspritzventil eine Fluidmenge einspritzbar ist,
einem Kolben, der in der Messkammer angeordnet ist,
einem Sensor, dessen erzeugte Spannung ein Maß für die Auslenkung des Kolbens darstellt, und der mit einer Auswerteeinheit verbunden ist, die kontinuierlich die Auslenkung des Kolbens in der Messkammer erfasst,
einer rotatorischen Verdrängerpumpe, die in Abhängigkeit der anliegenden Volumendifferenz angetrieben ist und in einem Bypasskanal zur Messkammer angeordnet ist und
einem Drucksensor, der in der Messkammer angeordnet ist,
**dadurch gekennzeichnet, dass**
an der Messkammer (2) Heiz- oder Kühlelemente (32) angeordnet sind, die über ein Steuergerät (26) derart betätigbar sind, dass die durch die eingespritzte Fluidmenge und die Kühl- oder Heizelemente (32) insgesamt eingebrachte Energiemenge pro Einspritzung im Wesentlichen konstant ist.

2. System zur Messung von Einspritzvorgängen nach Anspruch 1,
**dadurch gekennzeichnet, dass**
die Heizelemente (32) Glühkerzen sind.

3. System zur Messung von Einspritzvorgängen nach einem der Ansprüche 1 oder 2,
dadurch gekenntzeichnet, dass
eine Kühlvorrichtung (34) an der Messkammer (2) angeordnet ist, über die eine konstante Wärmemenge aus der Messkammer (2) abführbar ist.

4. System zur Messung von Einspritzvorgängen nach Anspruch 3,
dadurch gekenntzeichnet, dass
die der Kühlvorrichtung (34) zugeführte Kühlmittelmenge über ein mit dem Steuergerät (26) verbundenes Magnetventil (36) regelbar ist.

5. System zur Messung von Einspritzvorgängen nach einem der vorhergehenden Ansprüche,
dadurch gekenntzeichnet, dass
in der Messkammer (2) ein Temperaturfühler (30) angeordnet ist.

6. Verfahren zur Messung von Einspritzvorgängen mit einem System gemäß einem der vorhergehenden Ansprüche,
**dadurch gekennzeichnet, dass**
eine im Wesentlichen konstante Energiemenge pro Einspritzung in die Messkammer (2) eingebracht wird, welche sich aus der durch die Einspritzung eingebrachten Energiemenge und einer über Heiz- oder Kühlelemente (32) eingebrachten Energiemenge zusammensetzt.

7. Verfahren zur Messung von Einspritzvorgängen nach Anspruch 6
**dadurch gekennzeichnet, dass**
- ein maximaler Energieeintrag bei maximaler Öffnungszeit des Einspritzventils (4) berechnet wird;
- der zu erwartende Energieeintrag durch die Einspritzung berechnet oder der tatsächliche Energieeintrag gemessen wird;
- eine Differenzenergie zwischen maximalem Energieeintrag und tatsächlichem beziehungsweise zu erwartendem Energieeintrag berechnet wird;
- die Differenzenergie über die Heizelemente (32) in die Messkammer (2) eingebracht wird.

8. Verfahren zur Messung von Einspritzvorgängen nach Anspruch 6 dadurch gekennzeichet, dass
- ein tatsächlicher oder zu erwartender Energieeintrag durch die tatsächliche Einspritzung berechnet oder gemessen wird;
- diese Energie dem System über eine entsprechende Kühlung entzogen wird.

9. Verfahren zur Messung von Einspritzvorgängen nach einem der Ansprüche 7 oder 8,
dadurch gekennzeichet, dass
der zu erwartende Energieeintrag über ein Kennfeld berechnet wird, in dem der Energieeintrag über dem bei bestimmten Öffnungszeiten des Einspritzventils (4) zu erwartendem Durchfluss und der eingestellten Druckdifferenz aufgetragen wird.

10. Verfahren zur Messung von Einspritzvorgängen nach einem der Ansprüche 7 bis 9,
**dadurch gekennzeichnet, dass**
der tatsächliche Energieeintrag durch Messung einer Temperaturänderung in der Messkammer (2) bestimmt wird.

11. Verfahren zur Messung von Einspritzvorgängen nach Anspruch 9,
dadurch gekennzeichet dass
die Temperaturänderung nach Einbringen des zusätzlichen Energieeintrags gemessen wird und aus der Temperaturänderung ein Korrekturenergieeintrag bestimmt wird, der der Messkammer (2) zugeführt oder entzogen wird.

## Claims

1. A system for measuring injection processes, comprising
an injection valve,
a measurement chamber filled with a fluid, into which an amount of fluid can be injected by means of the injection valve,
a piston arranged in the measurement chamber,
a senor whose generated voltage is a measure of the piston travel and which is connected with an evaluation unit that continuously detects the travel of the piston in the measurement chamber,
a rotary displacement pump driven in dependence on the volume difference present and arranged in a bypass channel to the measurement chamber,
a pressure sensor arranged in the measurement chamber,
**characterized in that**
heating or cooling elements (32) are arranged at the measurement chamber (2), which can be actuated by means of a controller (26) such that the amount of energy per injection introduced on the whole by the injected fluid and the cooling or heating elements (32) is substantially constant.

2. The system for measuring injection processes of claim 1, **characterized in that** the heating elements (32) are glow plugs.

3. The system for measuring injection processes of one of claims 1 or 2, **characterized in that** a cooling device (34) is arranged at the measurement chamber (2), by which a constant amount of heat can be dissipated from the measurement chamber (2).

4. The system for measuring injection processes of claim 3, **characterized in that** the amount of coolant supplied to the cooling device (34) can be controlled through a magnet valve (36) connected with the controller (26).

5. The system for measuring injection processes of one of the preceding claims, **characterized in that** a temperature sensor (30) is arranged in the measurement chamber (2).

6. A method for measuring injection processes with a system of one of the preceding claims,
**characterized in that**
a substantially constant amount of energy is introduced into the measurement chamber (2) per injection, which is composed of the amount of energy introduced by an injection and an amount of energy introduced via heating or cooling elements (32).

7. The method for measuring injection processes of claim 6, **characterized in that**
- a maximum energy input is calculated for a maximum opening time of the injection valve (4);
- the expected energy input by the injection is calculated or the actual energy input is measured;
- an energy difference between the maximum energy input and the actual or expected energy input is calculated;
- the energy difference is introduced into the measurement chamber (2) through the heating elements (32).

8. The method for measuring injection processes of claim 6, **characterized in that**
- an actual or expected energy input by the actual injection is calculated or measured;
- this energy is withdrawn from the system via a corresponding cooling.

9. The method for measuring injection processes of one of claims 7 or 8, **characterized in that** the expected energy input is calculated using a characteristic diagram in which the energy input is plotted over the flow to be expected for certain opening times of the injection valve (4) and the differential pressure set.

10. The method for measuring injection processes of one of claims 7 to 9, **characterized in that** the actual energy input is determined by measuring a change in temperature in the measurement chamber (2).

11. The method for measuring injection processes of claim 9, **characterized in that** the change in temperature is measured after the introduction of the additional energy input, and a correction energy input is determined from the change in temperature, which is supplied to or withdrawn from the measurement chamber (2).

## Revendications

1. Système pour mesurer des processus d'injection, comprenant
une soupape d'injection,
une chambre de mesure remplie d'un fluide dans laquelle une quantité de fluide peut être injectée par ladite soupape d'injection,
un piston disposé dans ladite chambre de mesure,
un capteur dont la tension générée représente une mesure du déplacement dudit piston, et qui est relié à une unité d'évaluation détectant en continu le déplacement dudit piston dans la chambre de mesure,
une pompe volumétrique rotative entrainée en fonction de la différence de volume présente et disposée dans un conduit de dérivation de ladite chambre de mesure, et
un capteur de pression disposé dans ladite chambre de mesure,
**caractérisé en ce que**
des éléments de chauffage ou de refroidissement (32) sont disposés à ladite chambre de mesure (2), les éléments étant actionnable par un appareil de commande (26) de sorte que la quantité d'énergie totale par processus d'injection, introduite par la quantité de fluide injectée et par les éléments de refroidissement ou de chauffage (32), est sensiblement constante.

2. Système pour mesurer des processus d'injection selon la revendication 1, **caractérisé en ce que** les éléments de chauffage (32) sont des bougies de préchauffage.

3. Système pour mesurer des processus d'injection selon l'une des revendications 1 ou 2, **caractérisé en ce qu'**un dispositif de refroidissement (34) est disposé à ladite cambre de mesure (2), par lequel une quantité de chaleur constante peut être dissipée de ladite chambre de mesure (2).

4. Système pour mesurer des processus d'injection selon la revendication 3, **caractérisé en ce que** la quantité de liquide de refroidissement amenée au dispositif de refroidissement (34) peut être réglée par une soupape magnétique reliée audit appareil de commande (26).

5. Système pour mesurer des processus d'injection selon l'une quelconque des revendications précédentes, **caractérisé en ce qu'**un capteur de température (30) est disposé dans la chambre de mesure (2).

6. Procédé pour mesurer des processus d'injection par moyen d'un système selon l'une quelconque des revendications précédentes, **caractérisé en ce que**, par injection, une quantité d'énergie sensiblement constante est introduite dans la chambre de mesure (2), ladite quantité étant composée de la quantité d'énergie introduite par l'injection et de la quantité d'énergie introduite par des éléments de chauffage ou de refroidissement (32).

7. Procédé pour mesurer des processus d'injection selon la revendication 6, **caractérisé en ce que**
- l'on calcule un apport d'énergie maximal à temps d'ouverture maximal de la soupape d'injection (4);
- l'on calcule l'apport d'énergie attendu fourni par l'injection ou l'on mesure l'apport d'énergie réel;
- l'on calcule une quantité différentielle entre l'apport d'énergie maximal et l'apport d'énergie réel ou attendu;
- l'on introduit ladite quantité différentielle dans la chambre de mesure (2) par les éléments de chauffage (32).

8. Procédé pour mesurer des processus d'injection selon la revendication 6, **caractérisé en ce que**
- l'on calcule ou mesure l'apport d'énergie réel ou attendu fourni par l'injection réelle;
- l'on enlève cette énergie du système par moyen d'un refroidissement correspondant.

9. Procédé pour mesurer des processus d'injection selon l'une des revendications 7 ou 8, **caractérisé en ce que** l'apport d'énergie attendu est calculé par un champ caractéristique dans lequel l'apport d'énergie est tracé sur le débit attendu lors de temps d'ouverture déterminés de la soupape d'injection (4) et sur la pression différentielle réglée.

10. Procédé pour mesurer des processus d'injection selon l'une des revendications 7 ou 8, **caractérisé en ce que** l'apport d'énergie réel est déterminé par mesure d'une variation de température dans la chambre de mesure (2).

11. Procédé pour mesurer des processus d'injection selon la revendication 9, **caractérisé en ce que** la variation de température est mesurée après l'introduction de l'apport d'énergie additionnel et que l'on détermine un apport d'énergie de correction à partir de la variation de température, qui est introduit dans ou enlevé de la chambre de mesure (2).
